# EUROPEAN PATENT APPLICATION

(11) **EP 1 798 640 A1**
(43) Date of publication of application: **20.06.2007**
(21) Application number: 06291807.3
(22) Date of filing: 23.11.2006
(51) Int. Cl.: G06F 9/445

(54) **Apparatuses and methods for receiving software**

(30) Priority: 19.12.2005 KR 20050125435
(71) Applicant: LG Electronics Inc., Youngdungpo-Gu Seoul (KR)
(72) Inventor: Choi, Hyun Sik, Gangdong-gu Seoul 134-808 (KR)
(74) Representative: Cabinet Plasseraud

(57) **Abstract**

A method for receiving software includes receiving information corresponding to at least one software code module; selecting the information corresponding to the at least one software code module; determining whether the at least one software code module can be used in a host based on the selected information; and receiving the at least one software code module if it is determined that the at least one software code module can be used in the host.

## Description

This application claims the benefit of Korean Application No. 10-2005-0125435, filed on December 19, 2005, which is hereby incorporated by reference as if fully set forth herein.

### BACKGROUND

### Field of the Disclosure

The present disclosure relates to content broadcasting technology, and more particularly, to apparatuses and methods for receiving software.

### Background

A content broadcasting system may include a broadcasting station transmitting content through a wired (e.g., cable or telephone) or wireless (e.g., cellular or satellite) network and a host, such as a broadcast receiver receiving the transmitted contents. For example, in cable broadcasting, the broadcasting station may be a system operator (SO) headend, or a multiple system operator (MSO) headend. The SO may be a local cable TV broadcasting operator and the MSO may be several SOs grouped together. The broadcast receiver may include a communication card to communicate between the broadcasting station and the broadcast receiver.

A cable broadcast receiver, receives contents from the broadcasting station or a cable headend. The cable broadcast receiver may be provided with a cable card or a point of deployment (POD) module that can be inserted in a slot located at the cable broadcast receiver. Alternatively, the cable broadcast receiver may have a built-in module that is a functional equivalent of the cable card. As such the cable broadcast receiver may have a configuration that may or may not require a separate cable card.

Where a cable card is required, the cable card may use a personal computer memory card international association (PCMCIA) standard in order to interface with the cable broadcast receiver. The cable card may include a conditional access system (CAS). However, as described above, where the cable broadcast receiver does not require a cable card, the cable broadcast receiver may receive the CAS that is downloadable from the cable headend and stored in a memory of the cable broadcast receiver. The downloadable software is usually referred to as download conditional access system (DCAS).

The cable headend or plant can receive broadcasting signals from a broadcasting station through several communication networks. The cable headend transmits the cable broadcasting signals received through the networks including nodes to the cable broadcast receiver. In various instances, the cable broadcast receiver can perform a bidirectional communication with a cable headend through the cable network.

### SUMMARY

The cable headhend may transmit a software code, which may be implemented in the cable broadcast receiver through a cable connection. Thus, the cable broadcast receiver may remotely receive the software code, and install or update its software by using the received software code. The software code may be divided into one or more code blocks. Hereinafter, the code blocks will be referred to as "software code blocks" or "download data blocks."

Instead of receiving the actual software code, the cable broadcast receiver may first receive software code information that provides information about the software code. Hereinafter, the software code information will be referred to as "software download code information." The software download code information may include software code version or locator information of the software code corresponding to a product version of the cable broadcast receiver. Accordingly, the software download code information may vary depending on the manufacturers or hardware version of the cable broadcast receivers, so that a suitable software code may be implemented in the target cable broadcast receiver.

However, problems exist in that even though the software download code information can be used for a cable broadcasting receiver having two different hardware versions, separate software download code information may be required for each cable broadcasting receiver. In other words, even though a software code can be implemented in cable broadcast receivers of different manufacturers or different hardware versions, separate software download code information may be required for each cable broadcast receiver.

In addition, a problem exists in that separate software code is required to correspond to separate download code information in spite of the fact that several cable broadcast receivers can use a single software code, and thus bandwidth of a cable signal may increase and the downloading time of the software code may also increase.

Moreover, a problem exists in that the cable headend needs to be provided with software download code information for each product version of the cable broadcast receiver.

Accordingly, the present disclosure is directed to apparatuses and methods for receiving software, which substantially obviates one or more problems described above.

For example, the disclosure may disclose apparatuses and methods for receiving software in cable broadcasting, in which separate software download code information may not be required for each product version of cable broadcast receivers that can use a common software code, so that the software download code information and the software code may be more efficiently provided through the cable network.

Advantages, objects, and features of the invention in part may become apparent in the description which follows and in part may become apparent to those having ordinary skill in the art upon examination of the following or may be learned from practice of the invention. The objectives and other advantages of the various embodiments of the invention may be realized and attained by the structures and processes described in the written description, in the claims, and in the appended drawings.

To achieve these objects and other advantages and in accordance with the purpose of the invention, as embodied and broadly described herein, a method includes receiving information corresponding to at least one software code module; selecting the information corresponding to the at least one software code module; determining whether the at least one software code module can be used in a host based on the selected information; and receiving the at least one software code module if it is determined that the at least one software code module can be used in the host.

In another aspect, a method includes receiving at a communication device information that includes separate information for each of a plurality of software code modules; forwarding from the communication device, information corresponding to at least one software code module that is applicable to a host; determining at the host, whether the at least one software code module can be used by the host based on the forwarded information corresponding to the at least one software code module; and receiving the at least one software code module if the determination is made that the at least one software code module can be used in the host.

In another aspect, a host includes a controller configured to receive information corresponding to at least one software code module, the controller further configured to select the information corresponding to the at least one software code module, the controller further configured to determine whether the at least one software code module can be used in the host based on the selected information, and the controller further configured to receive the at least one software code module if the controller determines that the at least one software code module can be used in the host.

In yet another aspect, a communication device includes a controller configured to receive information for each of a plurality of software code modules; and the controller further configured to forward the information corresponding to at least one software code module that is applicable to a host.

It is to be understood that both the foregoing general description and the following detailed description are exemplary and explanatory and should not be construed as limiting the scope of the claims.

### BRIEF DESCRIPTION OF THE DRAWINGS

The accompanying drawings, which are included to provide a further understanding of the disclosure are incorporated in and constitute a part of this application. The drawings together with the written description serve to explain one or more embodiment(s) of the invention. In the drawings:

FIG. 1 illustrates one example of syntax of a code version table (CVT) according to one embodiment of the present invention;

FIG. 2 is an exemplary flow chart illustrating a method for receiving software according to one embodiment of the present invention;

FIGS. 3(a) -3(c) are diagrams that illustrate an exemplary selection technique of software code information according to one embodiment of the present invention; and

FIG. 4 is a schematic diagram that illustrates a cable broadcast system that installs or updates software according to one embodiment of the present invention.

### DETAILED DESCRIPTION

Reference will now be made in detail to the preferred embodiments of the present invention, examples of which are illustrated in the accompanying drawings. Wherever possible, the same reference numbers will be used throughout the drawings to refer to the same or like parts for simplicity.

Hereinafter, a code version table (CVT) will be described as an example of software download code information that may be used in a cable broadcasting system.

The code version table (CVT) may respectively be prepared to correspond to each host, such as a cable broadcast receiver. Each code version table (CVT) may include version information of a software download code to be updated and/or download position information of the software code.

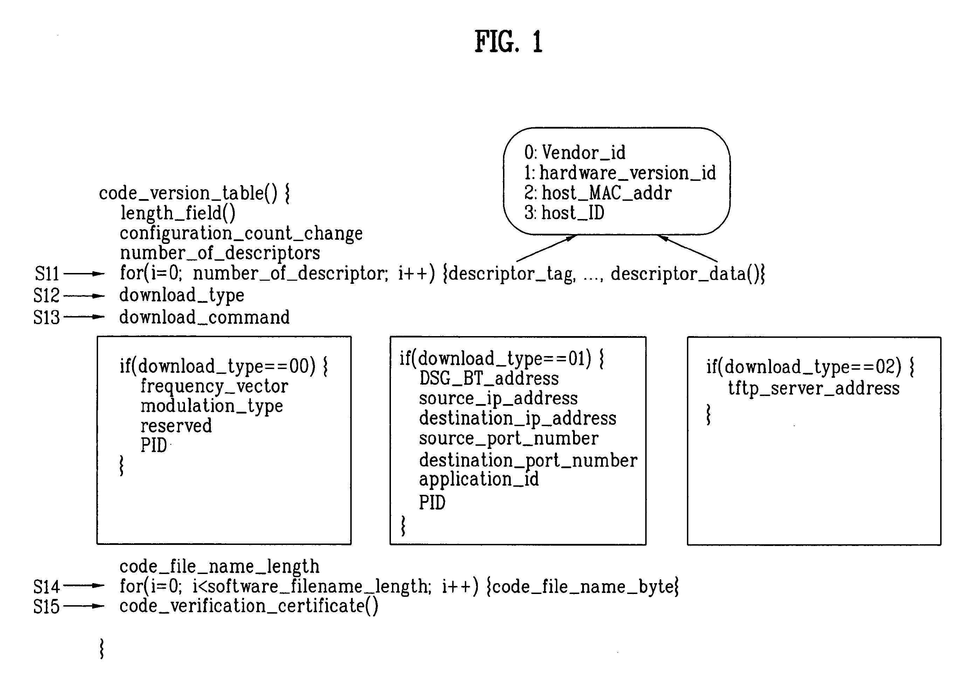

FIG. 1 illustrates one example of syntax of the code version table (CVT) according to one embodiment of the present invention. Referring to FIG. 1, the code version table (CVT) may include two values, i.e., descriptor_tag and descriptor_data() that may be set in accordance with the number of descriptors (S11).

The code version table (CVT) may correspond to a hardware version of a cable broadcast receiver based on set values. For example, if descriptor_tag = 0x00 is satisfied, descriptor_data() may represent vendor_id. If descriptor_tag = 0x01 is satisfied, descriptor_data() may represent hardware_version_id.

The vendor_id may correspond to a manufacturer of the cable broadcast receiver, and hardware_version_id may correspond to a hardware version of the cable broadcast receiver. In addition, descriptor_data() may represent host_MAC_address, e.g., cable broadcast receiver MAC address if descriptor_tag = 0x02 is satisfied while it may represent host_ID, e.g., cable broadcast receiver identifier, if descriptor_tag = 0x03 is satisfied.

After receiving the code version table (CVT), the cable broadcast receiver may read a value of a download type (S12), and may obtain position information of software to be downloaded and a corresponding download path (S13). Also, the cable broadcast receiver may read a file name of a code at a download position for downloading the software (S14), and may identify whether the code has been authenticated (S15).

If a headend transmits a plurality of software download code information through the cable connection, a cable card may select only the code information corresponding to the cable broadcast receiver that it is coupled to and may transmit the selected code information to the cable broadcast receiver. The cable broadcast receiver may then retrieve a software code or a software code module by referring to the information contained in the selected software download code information.

Herein, the software code module may refer to a part of the software code or a code having a partial function. The software code module information may refer to information concerning the software code module.

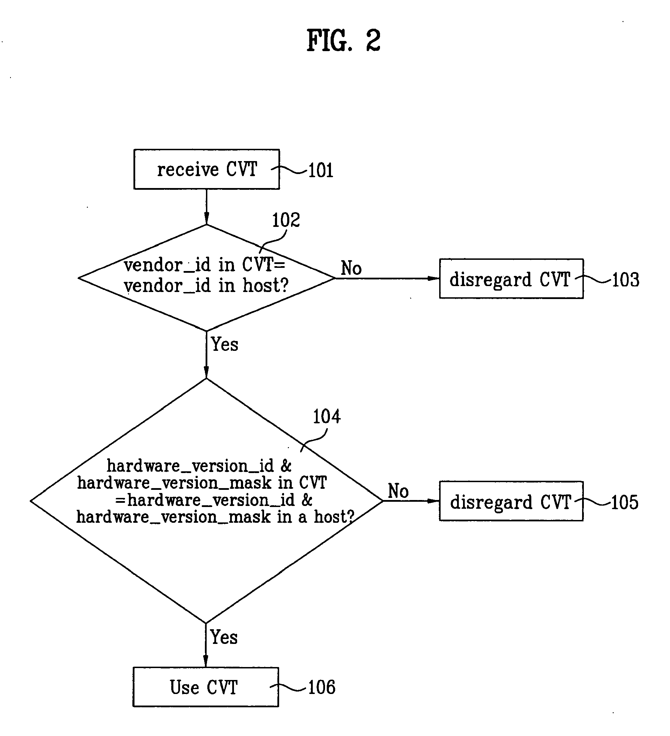

An exemplary method for receiving software according to one embodiment of the present invention will be described with reference to FIG. 2. The exemplary flowchart of FIG. 2 may be a process performed by one or more controllers.

The exemplary method may contemplate that a cable broadcast receiver may select the pertinent software code information from among the various software download code information made available by the cable headend. Accordingly, other cable broadcast receivers coupled to the cable network may select software download code information relevant to their needs and receive the relevant software in accordance with the selected software download code information. Because the cable broadcast receiver selects the relevant software code information from among the available software download code information, the cable broadcast receiver need not access every available software download code information.

According to one embodiment, the code version table (CVT) may include software code selection information to select a software code module from, for example, hardware_version_id in addition to the syntax illustrated in FIG. 1. The software code selection information, for example, could be a hardware_version mask.

For example, if a value of descriptor_tag is equal to 0x11 in the code version table (CVT), the software code selection information may be included in the code version table (CVT) to allow descriptor_data() to include the hardware_version_mask.

The flow process is now described. At step 101, a code version table (CVT) is received at the cable card. Then, at step 102, a determination is made whether vendor_id in the code version table (CVT) is identical with vendor_id of the host connected with the cable card. In this case, vendor_id may represent a manufacturer of the host.

If vendor_id in the code version table (CVT) is different from vendor_id of the host, then the process continues to step 103. At step 103, the cable card does not forward the code version table (CVT) to the host .

Otherwise, if the vendor_id in the code version table (CVT) matches with the vendor_id of the host, the process continues to step 104. At step 104, the cable card may determine whether a logic operation result of hardware_version_id and hardware_version_mask in the code version table (CVT) matches with a logic operation result of hardware_version_id and hardware_version_mask in the host. The cable card may select only some information of hardware_version_id using hardware_version_mask in making the determination.

If the software code module information selected from hardware_version_id by the hardware_version_mask does not match with that of the host, the process continues to step 105. At step 105, the cable card disregards the code version table (CVT).

Otherwise, if the software code module information selected from hardware_version_id by the hardware_version_mask matches with information selected using hardware_version_id and hardware_version_mask of the host, the cable card forwards thecode version table (CVT) to the host, where the host can download software by referring to the software version information and the position information contained in the code version table (CVT).

It should be appreciated that although the flow process of FIG. 2 has been described using a cable card, in the case where the host does not require a cable card, a built-in module within the host may perform the functions of the cable card described above.

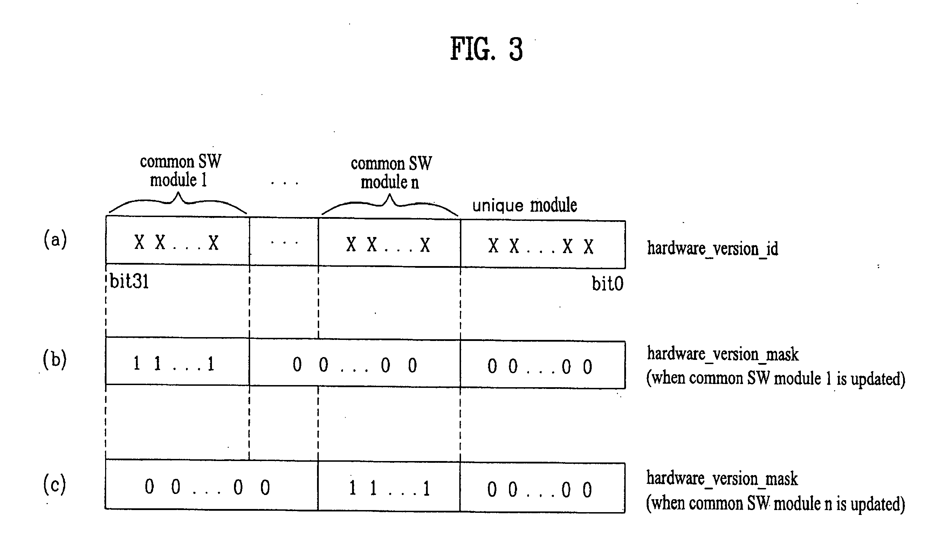

FIG. 3 illustrates an exemplary selection technique for performed on software code information according to one embodiment of the present invention.

The hardware_version id may represent a hardware version as described above, and may include software code module information that may be used in the hardware version. The hardware_version_id may include a common software code module area with a plurality of bit rows and a unique software code module area. It is assumed that the hardware_version_id illustrated in FIG. 3 may be a 32-bit parameter.

The common software code module may be a software code that may basically be implemented in each host, and may include a DOCSIS set top gate (DSG) module, a Java virtual machine (JVM) module, an open cable application protocol (OCAP) application program interface (API) module, etc.

The unique software code module, on the other hand, may be a software code module that may be implemented by a specific host.

In other words, as shown in FIG. 3(a), hardware_version_id may be divided into a plurality of bit rows that may express each software code module, wherein each bit row may include unique software code module information and common software code module information that may be implemented in the corresponding hardware version.

Referring to FIG. 3(b), hardware_version_mask may have a bit row of 1 corresponding to a specific module among the divided bit rows of hardware_version_id. Here, the specific module is common software module 1. As a result of the logic operation of the hardware_version_mask and the hardware_version_id (logic AND in FIG. 3), among the bit rows, the bit row representative of the common software code module 1 remains but the other bit rows become 0.

Thus, if the bit row representative of the module (common software code module 1 in FIG. 3(a)) remains after the logic operation of the hardware_version_mask and the hardware_version_id, the software code module (common software code module 1 in FIG. 3(a)) may be a software code module that may be used in the host. Accordingly, if the cable card transmits the code version table (CVT) to the host, the host may obtain position information of the common software code module 1 selected by the hardware_version_mask and retrieve the software code module

Referring to FIGS. 3(b) and 3(c), likewise, hardware_version_mask may have a bit row of 1 corresponding to common software module n from among the divided bit rows of hardware version id. As a result of the logic operation of the hardware_version_mask and the hardware_version_id (logic AND), among the bit rows, the bit row representative of the common software code module n remains but the other bit rows become 0.

The hardware_version_mask may be provided in the host. However, in the embodiment where the host includes a cable card, the hardware_version_mask may be included in the software code module information and then transmitted through the cable card.

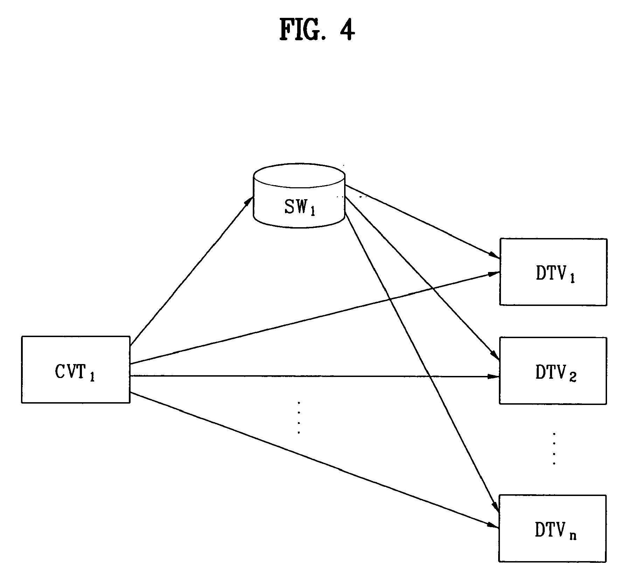

FIG. 4 is schematic diagram that illustrates a cable broadcast system that installs or updates software according to one embodiment of the present invention.

In the exemplary method, it may not be necessary to provide different kinds of software download code information for each host. In other words, the software download code information may commonly be provided for the respective hosts, wherein each host selectively receives its desired code information from the software download code information and receives the common software code module using the received code information.

In more detail, cable broadcasting receivers DTV1, DTV2, DTVn can extract information of a common software code module SW1 referring to a code version table CVT1, which is one kind of software download code information, so as to receive the module.

Accordingly, the bit row of the information representative of the hardware version may be managed systematically and every host does not require a tailored software download code information. As a result, it is possible to efficiently manage cable bandwidth and receive software.

As described above, the apparatuses and methods for receiving software, as described above, may have the following advantages:

Because separate software download code information may not be required for each manufacturer's version or hardware version of cable broadcasting receivers that can use a same software code, it is possible to efficiently provide the software download code information and the software code.

The present disclosure has been described using cable broadcast receivers, in which the cable broadcast receivers may have terrestrial analog/digital channels, and cable analog/digital channels. With modifications known to those skilled in the art, the present disclosure can be implemented in any terrestrial wired (e.g., telephone) and wireless (e.g., cellular) networks and satellite networks.

It will be appreciated that, in various of the above-disclosed and other features and functions, or alternatives thereof, they may be implemented on a programmed microprocessor, a microcontroller, an integrated circuit element such as ASIC, PLD, PLA, FPGA, or PAL, or the like, a hardwired electronic or logic circuit, or a programmable logic device.

It will be appreciated that the described flow process, tables or modules can be implemented as a self-consistent sequence of computerized steps that lead to a desired result. These steps can be defined by and/or in one or more computer instructions stored in a computer-readable medium, or can be encompassed using a signal, or provided as software instructions to a processing device. These steps can be performed by a processor executing the instructions that define the steps. Further, the flow process can be performed by a processor executing one or more appropriate programs, by special purpose hardware designed to perform the method, or any combination of such hardware, firmware and software elements.

It will be appreciated that various of the above-disclosed and other features and functions, or alternatives thereof, may be desirably combined into many other different devices or applications. Also, various presently unforeseen or unanticipated alternatives, modifications, variations or improvements therein may be subsequently made by those skilled in the art, and are also intended to be encompassed by the following claims.

## Claims

1. A method comprising the steps of:
receiving information corresponding to at least one software code module;
selecting the information corresponding to the at least one software code module;
determining whether the at least one software code module can be used in a host based on the selected information; and
receiving the at least one software code module if it is determined that the at least one software code module can be used in the host.

2. The method as claimed in claim 1, wherein the information corresponding to the software code includes at least one of information corresponding to a host manufacturer and information corresponding to host hardware.

3. The method as claimed in claim 1, wherein the information is contained in a sequence of bits.

4. The method as claimed in claim 3, further comprising the step of performing a logical bitmasking operation on the information contained in the sequence of bits in order to select information corresponding to the at least one software code module.

5. The method as claimed in claim 1, wherein the method is performed by a plurality of hosts.

6. A processor executable medium having instructions contained therein, which when executed by a processor causes the processor to perform the method of claim 1.

7. A method comprising the steps of:
receiving at a communication device information that includes separate information for each of a plurality of software code modules;
forwarding from the communication device, information corresponding to at least one software code module that is applicable to a host;
determining at the host, whether the at least one software code module can be used by the host based on the forwarded information corresponding to the at least one software code module; and
receiving the at least one software code module if the determination is made that the at least one software code module can be used in the host.

8. The method as claimed in claim 7, further comprising the step of determining, at the communication device, whether the information corresponding to the at least one software code module is applicable to the host based on at least one of host manufacturer information and host hardware information.

9. The method as claimed in claim 8, wherein the information corresponding to the at least one software code module is contained in a sequence of bits, the method further comprising the step of performing at the communication device, a logical bitmasking operation in order to retrieve the information associated with at least one software code module.

10. The method as claimed in claim 8, further comprising the step of comparing at the communication device, the information associated with the at least one software code module and corresponding information associated with the host including at least one of the host manufacturer and host hardware information

11. At least one processor executable medium containing instructions therein, which when executed by at least one processor causes the at least one processor to perform the method of claim 7.

12. A host comprising:
a controller configured to receive information corresponding to at least one software code module;
the controller further configured to select the information corresponding to the at least one software code module;
the controller further configured to determine whether the at least one software code module can be used in the host based on the selected information; and
the controller further configured to receive the at least one software code module if the controller determines that the at least one software code module can be used in the host.

13. The host as claimed in claim 12, wherein the information includes at least one of information corresponding to a host manufacturer and information corresponding to host hardware.

14. The host as claimed in claim 12, wherein the information is contained in a sequence of bits.

15. The host as claimed in claim 14, wherein the controller is further configured to perform a logical bitmasking operation on the information contained in the sequence of bits in order to select information corresponding to a specific software code module.

16. The host as claimed in claim 12, wherein the software code module can be used by a plurality of hosts.

17. A communication device comprising:
a controller configured to receive information for each of a plurality of software code modules; and
the controller further configured to forward the information corresponding to at least one software code module that is applicable to a host.

18. The communication device as claimed in claim 17, wherein the controller is further configured to determine whether the at least one software code module is applicable to the host based on the information corresponding to the at least one software code module, wherein the information includes at least one of information corresponding to a host manufacturer and information corresponding to host hardware.

19. The communication device as claimed in claim 18, wherein the information corresponding to the at least one software code module is contained in a sequence of bits, and the controller is further configured to perform a logical bitmasking operation in order to retrieve the information associated with at least one of information corresponding to a host manufacturer and information corresponding to a host hardware.

20. The communication device as claimed in claim 18, wherein the controller is further configured to compare the information associated with the at least one software code module and corresponding information associated with the host including at least one of the host manufacturer and host hardware information.

21. The communication device as claimed in claim 17, wherein the communication device is a cable card.
